# EUROPEAN PATENT SPECIFICATION

(11) **EP 1 780 105 B1**
(45) Date of publication and mention of the grant of the patent: **17.03.2010**
(21) Application number: 06123100.7
(22) Date of filing: 27.10.2006
(51) Int. Cl.: B62J 6/02

(54) **Headlight supporting structure**
Halterung für eine Scheinwerferbaugruppe
support de bloc de phare

(30) Priority: 31.10.2005 JP 2005316623
(43) Date of publication of application: 02.05.2007
(73) Proprietor: HONDA MOTOR CO., LTD., Tokyo 107-8556 (JP)
(72) Inventor: Nakajima, Hiroyuki c/o HONDA R&D., LTD., Saitama 351-0193 (JP); Yanagida, Takayuki c/o HONDA R&D CO., LTD., Saitama 351-0193 (JP); Suzuki, Yoshihiko c/o HONDA R&D CO., LTD., Saitama 351-0193 (JP); Odagiri, Hiroshi c/o HONDA R&D CO., LTD., Saitama 351-0193 (JP); Ogiya, Kanichiro c/o HONDA R&D CO., LTD., Saitama 351-0193 (JP)
(74) Representative: Poulin, Gérard

(56) References cited:
- EP-A- 1 479 563
- DE-A1- 10 012 896
- DE-A1- 19 649 602

## Description

### Technical Field

The present invention relates to a headlight supporting structure, and more specifically to a headlight supporting structure capable of fixing and supporting a headlight unit in place with greater stability.

### Background Art

In the related art, a headlight structure for a motorcycle is known in which a headlight unit, which is formed as a left-right two-lamp headlight by laterally arranging two bulbs in a single case, is arranged on the back surface side of an exterior part having two left and right openings, and two corresponding lens are respectively arranged between the two openings and the two bulbs.

Document JP-U No. 2526760 discloses a headlight supporting device in which when mounting the two-lamp headlight unit as described above onto the back surface side of a handlebar cover provided with two openings, the headlight unit is fixed and supported in place by means of two engaging portions provided on the left and right upper portions of the headlight unit, and one engaging portion provided at the center of the lower portion of the headlight unit. In the headlight supporting device, an adjustment unit is incorporated into the engaging portion at the center of the lower portion of the headlight; by changing the engagement position of the engaging portion in the lower portion of the headlight by means of the adjustment unit, the angle of the headlight can be adjusted in an arbitrary manner about the two engaging portions in the upper portion of the headlight unit.

Document DE 196 49 602, accordingly to the preamble of claim 1, shows a headlight with an upper lamp and a lower lamp. The headlight is mounted in the front cover by a supporting structure allowing an optical axis adjustment.

Document EP 1 479 573 shows a headlight with an upper lamp and a lower lamp, fixed to the body frame.

### Problem to be Solved by the Invention

However, with the technique according to Document JP-U No. 2526760 mentioned above, it is necessary to impart the handlebar cover as an exterior part with a rigidity sufficient for allowing the headlight unit as a heavy load to be fixed and supported thereon. Further, when the two-lamp headlight unit as described above is to be fixed and supported in place, an increase in weight results as compared with the case of a single-lamp headlight, and it becomes necessary to provide two openings in the handlebar cover, causing an increase in opening area, so a further increase in rigidity is required.

It is an object of the present invention to address the above-mentioned problems of the related art and provide a headlight supporting structure capable of fixing and supporting a headlight unit in place in a more stable manner.

### Means for Solving the Problem

In order to achieve the above-mentioned object, according to the present invention, there is provided a headlight supporting structure for a motorcycle as defined by features of claim 1, in which a left-right two-lamp headlight unit made of a single case is mounted onto a body cover, wherein the headlight unit is supported on a body frame at a supporting portion arranged at a predetermined position on an optical-axis adjustment axis thereof so as to allow optical axis adjustment.

According to the present invention, the headlight can be supported not only on the cover member of the body but also on the body frame, whereby the headlight unit as a heavy load can be fixed and supported in place in a stable manner. Further, as compared with the case of directly mounting the headlight unit onto the body cover as an exterior part, there is no need to enhance the rigidity of the body cover, whereby the number of manufacturing man-hours is reduced, and the body cover can be made lightweight. Further, the supporting portion bearing the weight of the headlight unit lies on the optical-axis adjustment axis, and supports the headlight unit so as to allow movement of the headlight at the time of optical axis adjustment, the operation of optical adjustment is not hindered, and the moment in the rocking motion of the headlight is reduced, whereby optical axis adjustment can be performed in a stable manner.

Further, the headlight unit may be supported on a stay connected to the body frame, the body cover being a front cover that covers the front of a vehicle, an opening being formed in the front cover, and left and right lens portions of the headlight unit being each exposed through the opening.

According to these features, the headlight unit can be supported by means of the stay connected to the body frame. Further, since the front cover is provided with an opening of a large surface area, the painting area decreases to reduce the number of manufacturing steps. Further, the lens portion of the headlight is exposed through the opening, thereby making it possible to achieve enhanced exterior appearance.

Further, the supporting portion may be arranged at substantially the center of a back surface side of the headlight unit.

According to this aspect, the headlight unit as a heavy load is supported at substantially the central portion thereof, whereby the headlight unit can be supported in good balance and more stably.

Further, the supporting portion may be a portion where an engaging shaft and a grommet are brought into engagement with each other, the engaging shaft being provided at substantially the center of the back surface side of the headlight unit, the grommet being fixed to one end of the stay.

According to these features, through the intermediation of the grommet formed from resin or the like, the vibration during running of the vehicle is prevented from being transmitted to the headlight unit, and the supporting portion is allowed to rock within a range necessary for optical axis adjustment by means of a simple construction.

Further, a support shaft of an optical axis for optical axis adjustment may be provided in each of left and right side surfaces of the headlight unit.

According to these features, the headlight unit is supported not only at the supporting portion but at three points also including the support shafts on both left and right side surfaces of the headlight unit, whereby the headlight unit can be supported in a more stable manner.

Further, the support shaft may be arranged on the optical-axis adjustment axis, and be rotatably journalled to a mounting portion provided in the front cover.

According to these features, the support shaft serves to guide the rocking motion for adjusting the optical axis, whereby rocking motion without left-right unbalance can be realized to allow more accurate optical axis adjustment.

Further, a substantially disc-like flange may be provided to an end of the support shaft on an outer side in a vehicle width direction.

According to this feature, when mounting the headlight unit onto the mounting portion on the front cover side, the flange serves as a guide to facilitate fitting of the headlight unit at a predetermined position, whereby the number of manufacturing steps can be reduced. Further, lateral backlash of the headlight unit with respect to the front cover can be suppressed, thereby making it possible to prevent the gap between the headlight unit and the front cover from widening.

Further, an adjustment mechanism for optical axis adjustment may be provided in a lower surface portion of the headlight unit.

According to this feature, as compared with the arrangement of the related art in which the optical-axis adjustment axis is provided in the upper surface portion of the headlight unit, and the headlight unit is rocked by means of an adjustment mechanism provided in the lower surface portion thereof, the distance from the optical-axis adjustment axis to the adjustment mechanism decreases, whereby setting to a predetermined adjusted position can be effected by means of a small adjustment.

### Brief Description of the Drawings

Hereinbelow, preferred embodiments of the present invention will be described in detail with reference to the drawings, in which:
Fig. 1 is a side view of a motorcycle to which a headlight supporting structure according to an embodiment of the present invention is applied.
Fig. 2 is a partial enlarged view of Fig. 1.
Fig. 3 is a perspective view of a front cover according to an embodiment of the present invention.
Fig. 4 is a front view of a headlight unit according to an embodiment of the present invention.
Fig. 5 is a side view of a headlight unit according to an embodiment of the present invention.
Fig. 6 is a rear view of a headlight unit according to an embodiment of the present invention.
Fig. 7 is a top view showing a headlight supporting structure according to an embodiment of the present invention.
Fig. 8 is a perspective view showing a headlight supporting structure according to an embodiment of the present invention.
Fig. 9 is a front view of a front cover according to an embodiment of the present invention.
Fig. 10 is a sectional view taken along the line A-A of Fig. 9.
Fig. 11 is a view as seen in the direction B of Fig. 10.
Fig. 12 is a side view of a front cover according to an embodiment of the present invention.
Fig. 13 is a partial enlarged view of a headlight supporting structure according to an embodiment of the present invention.

### Best Mode for Carrying Out the Invention

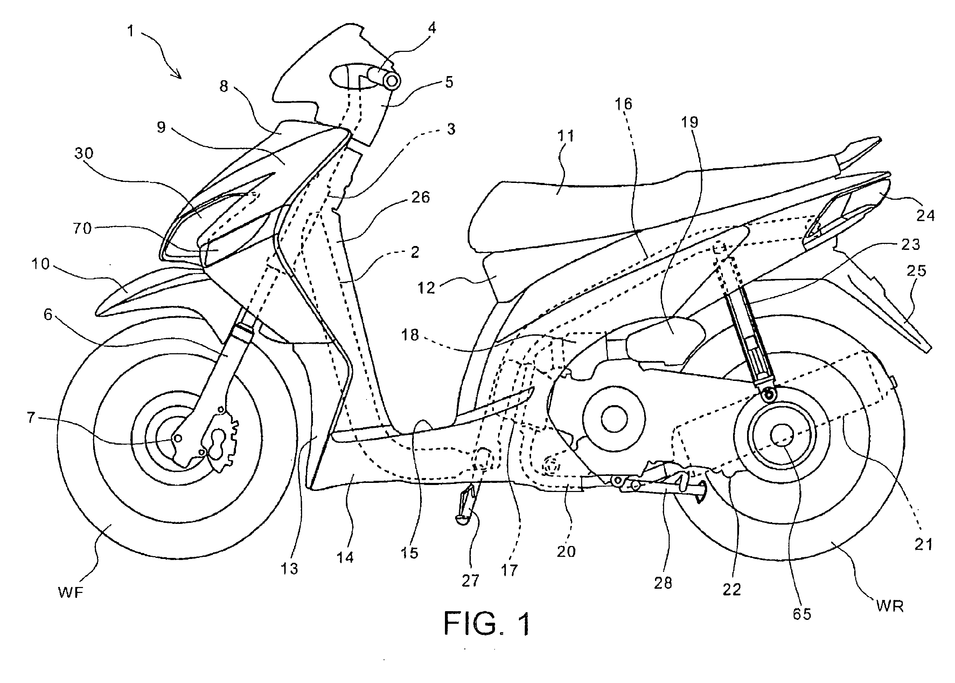

Fig. 1 is a side view of an embodiment of a motorcycle to which the present invention is applied. A motorcycle 1 is a scooter type motorcycle equipped with a unit swing type power unit with a built-in continuously variable transmission. A pair of left and right front forks 6 are pivotally mounted on a head pipe 3 fixedly coupled to a main frame 2 as a body frame. A front wheel WF is rotatably journalled to an axle 7 at the lower end of the front forks 6. The front forks 6 can be steered by means of a handlebar 4 that projects laterally in the vehicle width direction from a handlebar cover 5. A front fender 10 covering the portion above the front wheel WF is steered integrally with the front forks 6. A left-right two-lamp headlight unit 30, and a winker unit 70 consisting of a left-right pair is mounted to a front cover 9 that is a body cover arranged above the front fender 10. A split-type center cover 8 is connected to an upper portion of the front cover 9 so as to form a continuous exterior surface with the front cover 9. Further, a cover panel 26 for covering the main frame 2 is arranged on the vehicle rear side of the front cover 9. At its lower portion, the cover panel 26 is joined to a step floor 15 on which the feet of the occupant are placed. Further, a front lower cover 13 connected to a lower portion of the front cover 9 is joined to an under cover 14 located below the step floor 15.

A side stand 27 is installed at a lower rear portion of the main frame 2. A seat frame 16 for supporting a seat 11, on which the occupant sits, a body cover 12, and the like is also coupled to the lower rear portion of the main frame 2. Further, one end side of a power unit 22 including an engine 17, a carburetor 18, and an air cleaner box 19 is pivotally mounted on the main frame 2 in the rear of the body. The power unit 22 is suspended by means of a rear cushion 23, which is attached to the seat frame 16, so as to be rockable about the one end side. A rear wheel WR as a drive wheel is journalled to the other end side of the power unit 22 so as to be rotatable about an axle 65. Further, an exhaust pipe 20 whose one end is connected to an exhaust port (not shown) provided in the cylinder head of the engine 17 is coupled to a muffler 21 in the rear of the vehicle. Attached to a lower portion of the power unit 22 is a main stand 28 for holding the motorcycle 1 upright when the occupant gets off the vehicle. Further, a stop lamp unit 24, in which a tail lamp and left and right winker units are integrally formed, is arranged at the end of the body cover 12 in the rear of the vehicle. A rear fender 25 that covers the rear wheel WR is mounted below the stop lamp unit 24. A headlight supporting structure according to the present invention is applied to the headlight unit 30 mounted on the front cover 9, and to the supporting structure for the headlight unit 30.

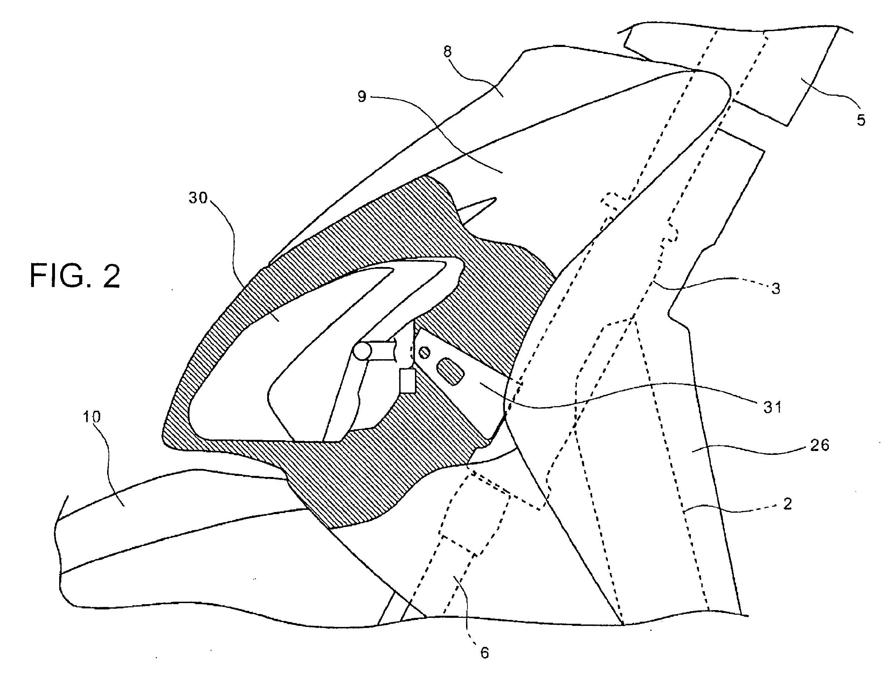

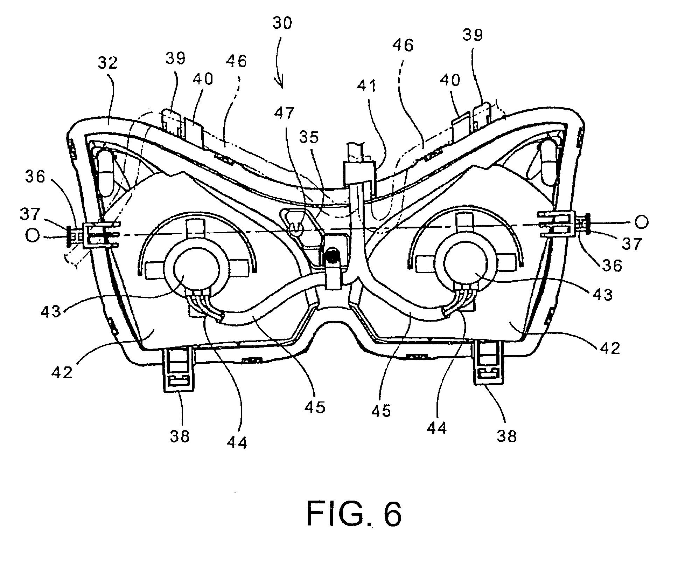

Fig. 2 is a partial enlarged view of Fig. 1 including the front cover 9. Reference numerals that are the same as those described above denote portions that are the same as or equivalent to those described above. In order to explain the supporting structure for the headlight unit 30, Fig. 2 shows a state in which the front cover 9 is partially removed. A headlight stay 31 extending toward the front of the vehicle and made from a steel plate or the like is welded onto the outer peripheral surface on the vehicle front side of the head pipe 3 formed in a substantially cylindrical configuration. The headlight unit 30 is constructed so that an engaging portion (see Fig. 6) provided on the back surface side thereof is brought into engagement with the front end of the headlight stay 31.

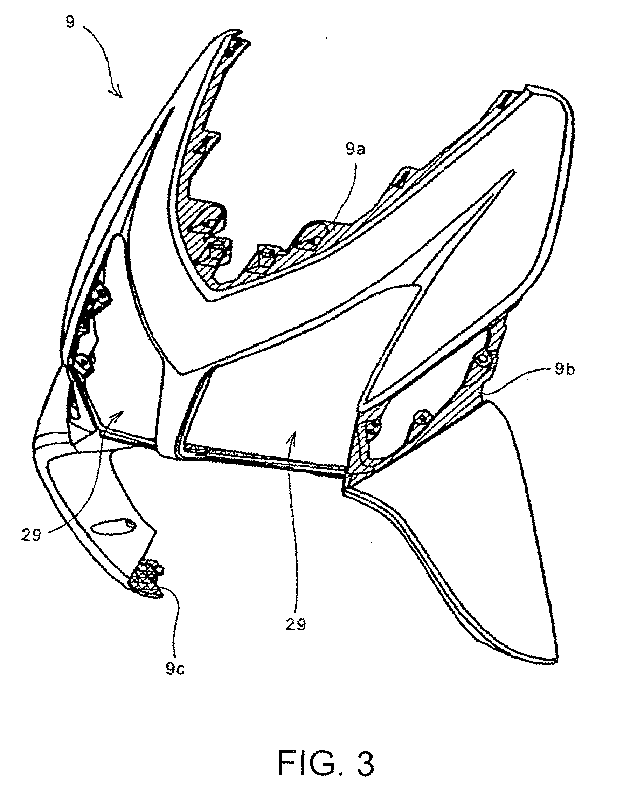

Fig. 3 is a perspective view of the front cover 9. Reference numerals that are the same as those described above denote portions that are the same as or equivalent to those described above. An engaging portion 9a for engagement with the center cover 8, a mounting portion 9b for the winker unit 70, and an engaging portion 9c for engagement with the front lower cover 13 are formed in the front cover 9 that is formed integrally from resin or the like. Further, two openings 29 through which the lens surfaces of the headlight unit 30 are exposed are provided in the surface on the front of the vehicle. It should be noted that since the front cover 9 according to this embodiment has the two openings 29 of a large surface area, it also provides the effect of reducing the number of manufacturing steps due to the reduced painting area.

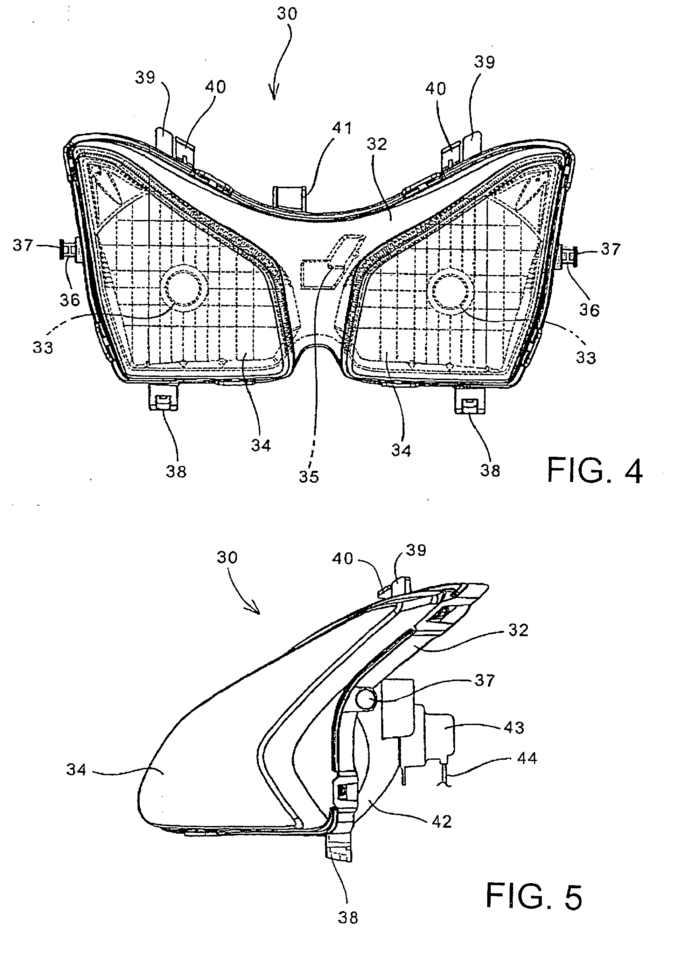

Fig. 4 is a front view of the headlight unit 30. Reference numerals that are the same as those described above denote portions that are the same as or equivalent to those described above. The headlight unit 30 is a left-right two-lamp headlight formed by placing two bulbs 33 in a single case 32 and covering the bulbs 33 respectively with symmetrical left and right lens 34. Upon mounting the headlight unit 30 onto the front cover 9, only the portions of the lens 34 are exposed through the openings 29 (see Fig, 3) of the front cover 9. Further, a mount 35 having an engaging shaft (see Fig. 6) for engagement with the headlight stay 31 (see Fig. 2) is formed on the back surface side of the case 32. Further, a substantially cylindrical support shaft 36 that has been subjected to lightening, and a substantially disc-shaped flange 37 formed integrally with the support shaft 36 are provided to each of the left and right side surfaces of the case 32. In addition, an optical-axis adjustment stay 38 accommodating an optical adjustment mechanism of a screw type or the like is provided on each of the left and right of the lower surface portion of the case 32. It should be noted that wirings (see Fig. 6) for supplying electric power to the bulbs 33 are bundled together at predetermined locations by means of wiring guides 39, 40, 41 installed on the upper surface of the case 32.

Fig. 5 is a side view of the headlight unit 30. Reference numerals that are the same as those described above denote portions that are the same as or equivalent to those described above. A reflector portion 42 formed in a substantially crest-like convex shape is provided laterally on the back surface side of the case 32. The bulbs 33 are inserted from an opening formed at substantially the top of the reflector portion 42, and connectors 43 for supplying electric power from wirings 44 are connected to terminals provided at the rear end thereof. It should be noted that the reason why the installation location of the flange 37 is displaced slightly to the rear side of the vehicle (to the right in the drawing) from the optical-axis adjustment stay 38 is to secure, with respect to the support shaft 36 as the rotary shaft for optical axis adjustment, the amount of offset required for rotating the headlight unit 30.

Fig. 6 is a rear view of the headlight unit 30. Reference numerals that are the same as those described above denote portions that are the same as or equivalent to those described above. The wiring guide 41 installed on the upper surface of the case 32 serves to tie the wirings 44 coupled to the left and right connectors 43, and wirings 45 in which the wirings 44 are covered with a tube made of resin or the like, into a bundle at one location. On the other hand, the wiring guides 39, 40 serve to arrange wirings 46, which are used for supplying electric power to the left and right winker units and the like, at predetermined positions. Installed on the mount 35 is an engaging shaft 47 with a substantially U-shaped cross section for engagement with the headlight stay 31 (see Fig. 2). The engaging shaft 47 is located on the line O-O corresponding to a horizontal optical-axis adjustment axis connecting between the right and left support shafts 36 and flanges 37. It should be noted that while in this embodiment the installation location of the engaging shaft 47 is positioned slightly to the left with respect to the central portion of the headlight unit 30, it is needless to mention that the engaging shaft 47 may be arranged at the central portion or slightly to the right on the line O-O in accordance with changes in the routing of wiring or in the configuration of the headlight stay.

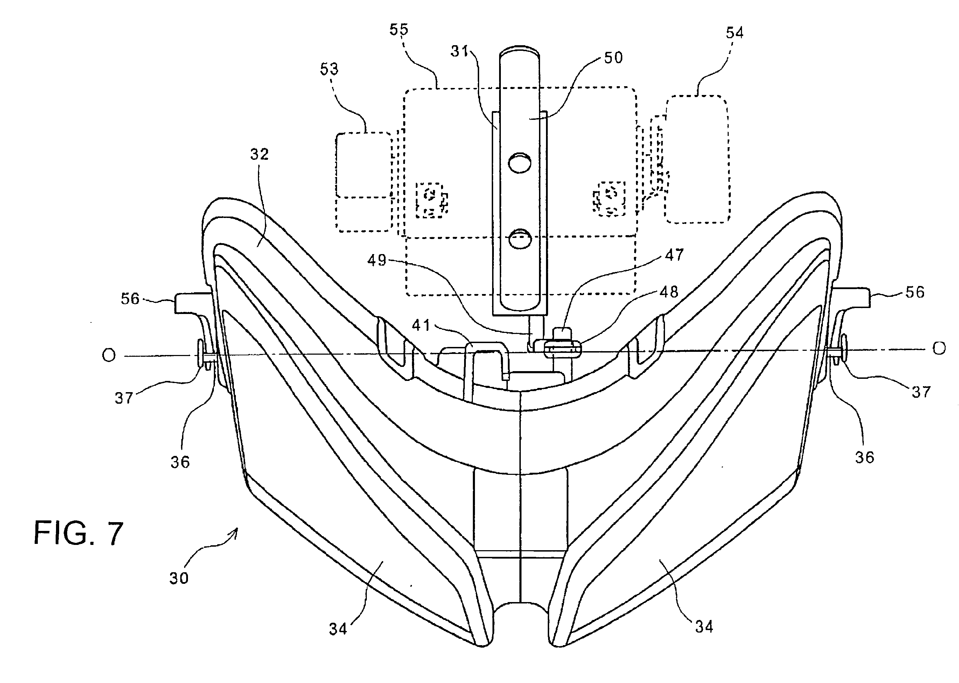

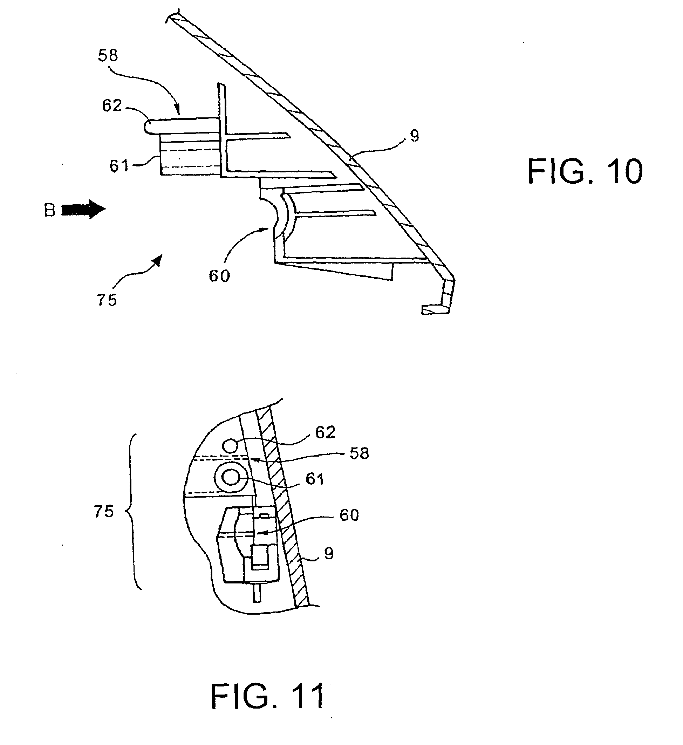

Fig. 7 is a top view of the headlight unit 30. Reference numerals that are the same as those described above denote portions that are the same as or equivalent to those described above. Fig. 7 also shows auxiliaries that are arranged on the back surface side of the headlight unit 30 upon mounting the headlight unit 30 onto the motorcycle 1. A battery stay 50 for supporting a battery 55 is coupled in the direction upward of the vehicle (frontward direction in the drawing) to the headlight stay 31 welded onto the head pipe 3 (see Fig. 2). Auxiliaries 53, 54 are arranged in both side surface portions of the battery 55. Further, a support stay 49 for fixedly holding an annular grommet 48 formed of resin or the like is provided at the distal end of the headlight stay 31. The engaging shaft 47 provided on the back surface side of the case 32 is inserted into an engagement hole formed at the center of the grommet 48, thereby supporting the headlight unit 30 on the back surface side. Further, the engaging portion between the engaging shaft 47 and the grommet 48 is located on the line O-O connecting between the support shafts 36 and flanges 37 placed in the left and right side surfaces of the case 32. It should be noted that in Fig. 7, for the sake of description, a support shaft stay 56 is depicted as being located on the vehicle rear side of the support shaft 36. The support shaft stay 56 is a separate component that is fixed onto a cylinder portion 61 with a screw or the like after being positioned onto the front cover 9 by means of a dowel 62 (see Fig. 10), thereby slidably holding the outer peripheral surface of the support shaft 36 on the vehicle rear side. The support shaft stay 56 is arranged at the position illustrated in the drawing for the first time when fixing and supporting the headlight unit 30 onto the front cover 9.

Due to the above-described construction, in the headlight supporting structure according to this embodiment, when the engaging shaft 47 is engaged with the headlight stay 31 welded onto the head pipe 3, and the support shaft 36 and the flange 37 are engaged with the front cover 9, the headlight unit 30 is fixed and supported onto the motorcycle 1 at a total of three engaging portions located on the line O-O. It should be noted that the flange 37 of the support shaft 36 functions as a guide for engagement with the support shaft stay 56 and with the mounting portion on the front cover 9 side as described later. In addition to facilitating the assembly, the flange 37 serves to prevent backlash or the like of the headlight unit 30 in the vehicle width direction.

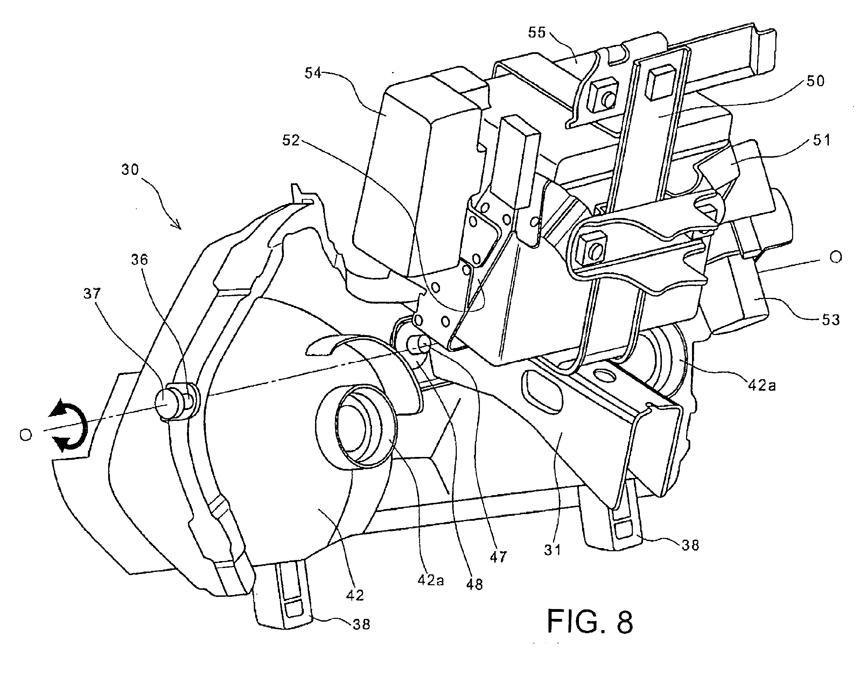

Fig. 8 is a perspective view showing a state where the headlight unit 30 is engaged with the headlight stay 31. Reference numerals that are the same as those described above denote portions that are the same as or equivalent to those described above. In the drawing, the connectors 43 (see Fig. 6) have been removed from the bulbs 33, and a guide rib 42a is formed at the top of the reflector portion 42.

As described above, the headlight unit 30 is supported at the distal end of the headlight stay 31 by means of the engaging shaft 47 provided on the back surface side of the case 32. Since the thick-walled portion of the grommet 48 formed of resin or the like having elasticity is interposed between the engaging shaft 47 and the headlight stay 31, the headlight unit 30 can be rocked with respect to the headlight stay 31 for the amount of elastic deformation the grommet 48 is allowed to undergo. Further, since the engaging portion between the engaging shaft 47 and the grommet 48 is arranged on the line O-O connecting between the support shafts 36 provided on both side surfaces of the case 32, even when the support shafts 36 are rotatably pivoted on the front cover 9, the rotary motion about the line O-O taken as the rotation axis is not hindered.

With the headlight supporting structure according to this embodiment, the optical axis adjustment for the headlight is effected through vertical motion of the headlight unit 30 about the line O-O as the rotation axis. Further, since the headlight stay 31 can serve to bear the weight of the headlight unit 30, it becomes unnecessary to enhance the rigidity of the front cover 9 in order to mount the headlight unit 30. Further, since the headlight unit 30 is supported on the headlight stay 31 of high rigidity that is welded onto the head pipe 3, the headlight unit 30 can be supported in a stable manner as compared with the case where the headlight unit 30 is supported on the front cover 9 formed of resin or the like. Further, as compared with the arrangement of the related art in which the optical-axis adjustment axis is provided in the upper surface portion of the headlight unit, and the headlight unit is rocked by means of an adjustment mechanism provided in the lower surface portion thereof, the distance from the line O-O serving as the optical-axis adjustment axis to the upper and lower ends of the headlight unit 30 decreases, whereby setting to a predetermined adjusted position can be effected by means of a small adjustment.

Further, the auxiliaries 53, 54 are supported onto both side surfaces of the battery 55 by means of sub-stays 51, 52 coupled to the battery stay 50, respectively. According to this construction, the headlight stay 31 can also serve to bear the weights of the battery stay 50, battery 55, sub-stays 51, 52, and auxiliaries 53, 54, thereby obviating the need to provide a stay or the like for supporting the auxiliaries onto the front cover 9 or the like. Furthermore, by arranging the auxiliaries in a concentrated manner in the vicinity of the headlight, concentration of mass or enhanced maintainability can be achieved.

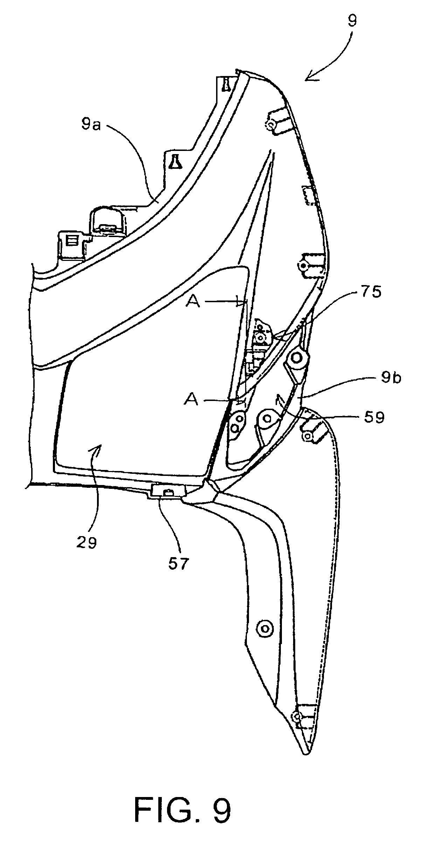

Fig. 9 is partial front view of the front cover 9. Reference numerals that are the same as those described above denote portions that are the same as or equivalent to those described above. Since the front cover 9 is formed so as to be laterally symmetrical, only the left half side of the front cover 9 in the vehicle width direction is shown in the drawing. The support shaft 36 and flange 37 of the headlight unit 30 is rotatably pivoted with respect to the front cover 9 at a mounting portion 75 arranged above an opening 59 in which the winker unit 70 (see Fig. 1) is fitted. Further, a recess 57 that is brought into fitting engagement with the optical-axis adjustment stay 38 is provided at the bottom of the openings 29 through which the lens 34 is exposed. When the position of the lower end of the headlight unit 30 is adjusted vertically in the recess 57, the headlight unit 30 is rocked vertically about the line O-O, thereby effecting optical axis adjustment. This optical-axis adjustment mechanism can be operated by inserting a driver or the like from a hole provided in a lower portion of the recess 57 with the headlight unit 30 being mounted on the motorcycle 1.

Fig. 10 is a sectional view taken along the line A-A of Fig. 9. Reference numerals that are the same as those described above denote portions that are the same as or equivalent to those described above. The mounting portion 75 is composed of a fastening portion 58, which includes the cylindrical portion 61 having a screw hole for a mounting screw and the dowel 62 above the cylindrical portion 61, and a rib 60 having a sliding surface for rotatably journalling the support shaft 36. The support shaft 36 is rotatably journalled to the front cover 9 while being sandwiched between the rib 60 and the support shaft stay 56 (see Fig. 7).

Fig. 11 is a view as seen in the direction B of Fig. 10. Reference numerals that are the same as those described above denote portions that are the same as or equivalent to those described above. The cylinder portion 61 and the dowel 62 are each brought into fitting engagement with a mounting hole (not shown) provided in the support shaft stay 56 (see Fig. 7). Due to the provision of the dowel 62, displacement of the mounting position and mounting angle of the support shaft stay 56 is prevented, and a cylindrical sliding surface allowing smooth rotation of the support shaft 36 is formed between it and the rib 60.

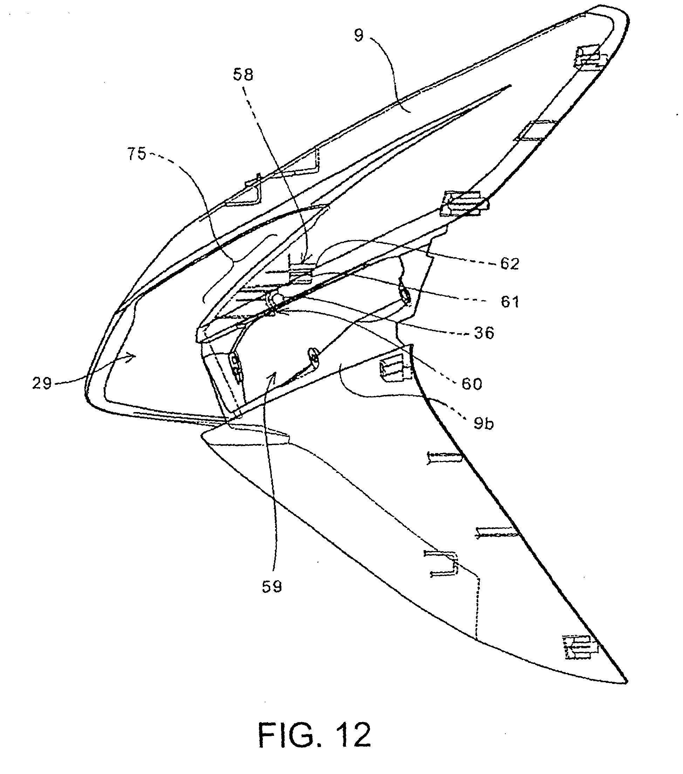

Fig. 12 is a side view of the front cover 9. Reference numerals that are the same as those described above denote portions that are the same as or equivalent to those described above. Fig. 12 also shows the position of the support shaft 36 upon mounting the headlight unit 30 onto the motorcycle 1. The fastening portion 58 and the rib 60 which constitute the mounting portion 75 is received within a small substantially triangle space between the openings 29 of the headlight unit 30 and the opening 59 of the winker unit 70.

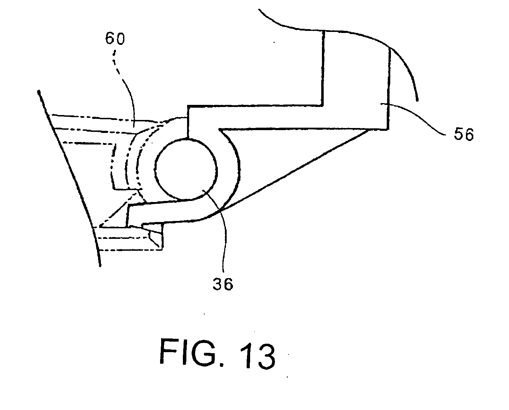

Fig. 13 is a side view showing the relationship between the mounting positions of the support shaft 36, rib 60, and support shaft stay 56. As described above, the support shaft 36 is rotatably journalled so as to be sandwiched between the rib 60 and the support shaft stay 56. Accordingly, the optical axis adjustment for the headlight unit 30 is realized by adjusting a screw mechanism accommodated in the optical-axis adjustment stay 38 to thereby cause the headlight unit 30 to rock about the support shaft 36 as a rotation axis.

As described above, with the headlight supporting structure according to the present invention, the headlight unit is supported on the headlight stay, which is connected to the main frame, on the optical-axis adjustment axis thereof, whereby the headlight unit can be supported in a stable manner with its weight being borne by the headlight stay. Further, since the support portion for bearing the weight of the headlight lies on the optical-axis adjustment axis, the moment in the rocking motion of the headlight for optical axis adjustment is reduced, thereby making it possible to perform optical axis adjustment in a stable manner. Further, since the weight of the headlight unit can be borne by the headlight stay, as compared with the case of mounting the headlight unit directly onto the front cover as an exterior part, there is no need to enhance the rigidity of the front cover, thereby making it possible to reduce the weight of the front cover.

It should be understood as a matter of course that the configurations of the headlight unit, front cover, headlight stay, and the like, the configurations of the engaging shaft and grommet, the mounting methods thereof, and the like are not limited to those of the above-described embodiments but may be modified in various ways.

## Claims

1. A headlight supporting structure for a motorcycle, in which a left-right two-lamp headlight unit (30) made of a single case is mounted onto a body cover,
**characterized in that** the headlight unit (30) is supported on a body frame (2) at a supporting portion (47) arranged at a predetermined position on an optical-axis adjustment axis (O-O) thereof so as to allow optical axis adjustment.

2. The headlight supporting structure according to Claim 1,
wherein: the headlight unit (30) is supported on a stay (31) connected to the body frame (2);
the body cover (9) is a front cover that covers the front of a vehicle;
an opening (29) is formed in the front cover (9); and
left and right lens portions (34) of the headlight unit (30) are each exposed through the opening (29).

3. The headlight supporting structure according to Claim 1 or 2, wherein the supporting portion (49) is arranged at substantially the center of a back surface side of the headlight unit (30).

4. The headlight supporting structure according to any one of Claims 1 to 3, wherein the supporting portion is a portion where an engaging shaft (47) and a grommet (48) are brought into engagement with each other, the engaging shaft (47) being provided at substantially the center of the back surface side of the headlight unit (30), the grommet (48) being fixed to one end of the stay (31).

5. The headlight supporting structure according to any one of Claims 1 to 4, wherein a support shaft (36) of an optical axis (O-O) for optical axis adjustment is provided in each of left and right side surfaces of the headlight unit (30).

6. The headlight supporting structure according to Claim 5, wherein the support shaft (36) is arranged on the optical-axis adjustment axis (O-O), and is rotatably journalled to a mounting portion (75) provided in the front cover (9).

7. The headlight supporting structure according to Claim 5 or 6, wherein a substantially disc-like flange (37) is provided to an end of the support shaft (36) on an outer side in a vehicle width direction.

8. The headlight supporting structure according to ary one of Claims 1 to 7, wherein an adjustment mechanism (38) for optical axis adjustment is provided in a lower surface portion of the headlight unit (30).

## Patentansprüche

1. Scheinwerfer-Tragestruktur für ein Motorrad, bei der eine aus einem einzigen Gehäuse hergestellte Links-rechts-Zwei-Lampen-Scheinwerfereinheit (30) auf einer Körperabdeckung (9) angebracht ist, **dadurch gekennzeichnet, dass**
die Scheinwerfereinheit (30) auf einem Körperrahmen (2) an einem Tragebereich (47) getragen wird, der an einer vorgegebenen Position auf einer Optische-Achse-Justierungsache (O-O) desselben angeordnet ist, um eine Justierung der optischen Achse zu ermöglichen.

2. Scheinwerfer-Tragestruktur nach Anspruch 1,
wobei: die Scheinwerfereinheit (30) auf einer mit dem Körperrahmen (2) verbundenen Stütze (31) getragen wird;
die Körperabdeckung (9) eine Frontabdeckung ist, die die Frontseite eines Fahrzeugs bedeckt;
eine Öffnung (29) in der Frontabdeckung (9) ausgebildet ist; und
linke und rechte Linsenbereiche (34) der Scheinwerfereinheit (30) jeweils durch die Öffnung (29) exponiert sind.

3. Scheinwerfer-Tragestruktur nach Anspruch 1 oder 2, wobei der Tragebereich (47) im Wesentlichen im Zentrum einer hinteren Oberflächenseite der Scheinwerfereinheit (30) angeordnet ist.

4. Scheinwerfer-Tragestruktur nach einem der Ansprüche 1 bis 3, wobei der Tragebereich ein Bereich ist, an dem eine Eingriffswelle (47) und eine Scheibe (48) miteinander in Eingriff gebracht werden, wobei die Eingriffswelle (47) im Wesentlichen im Zentrum der hinteren Oberflächenseite der Scheinwerfereinheit (30) vorgesehen ist, wobei die Scheibe (48) ein einem Ende der Stütze (31) befestigt ist.

5. Scheinwerfer-Tragestruktur nach einem der Ansprüche 1 bis 4, wobei eine Tragewelle (36) einer optischen Achse (O-O) zur Justierung der optischen Achse jeweils in den linken und rechten Seitenoberflächen der Scheinwerfereinheit (30) vorgesehen ist.

6. Scheinwerfer-Tragestruktur nach Anspruch 5, wobei die Tragewelle (36) auf der Optische-Achse-Justierungsachse (O-O) vorgesehen und rotierbar an einem in der Frontabdeckung (9) vorgesehenen Befestigungsbereich (75) gelagert ist.

7. Scheinwerfer-Tragestruktur nach Anspruch 5 oder 6, wobei ein im Wesentlichen scheibenähnlicher Flansch (37) auf einer Außenseite in Richtung der Breite eines Fahrzeugs an einem Ende der Tragewelle (36) vorgesehen ist.

8. Scheinwerfer-Tragestruktur nach einem der Ansprüche 1 bis 7, wobei ein Justierungsmechanismus (38) zur Justierung der optischen Achse in einem unteren Oberflächenbereich der Scheinwerfereinheit (30) vorgesehen ist.

## Revendications

1. Structure de support de phare pour une motocyclette, dans laquelle une unité de phare à deux lampes gauche - droite (30) réalisée avec un seul carter est montée sur un couvercle de caisse (9), **caractérisée en ce que** l'unité de phare (30) est supportée sur un châssis de caisse (2) en une partie de support (47) agencée dans une position prédéterminée sur son axe d'ajustement axial optique (O-O) afin de permettre l'ajustement de l'axe optique.

2. Structure de support de phare selon la revendication 1, dans laquelle l'unité de phare (30) est supportée sur un montant (31) raccordé au châssis de caisse (2) ;
le couvercle de caisse (9) est un couvercle avant qui recouvre l'avant d'un véhicule ;
une ouverture (29) est formée dans le couvercle avant (9) ; et
des parties de lentilles gauche et droite (34) de l'unité de phare (30) sont chacune exposées à travers l'ouverture (29).

3. Structure de support de phare selon la revendication 1 ou 2, dans laquelle la partie de support (47) est agencée sensiblement au centre d'un côté de surface arrière de l'unité de phare (30).

4. Structure de support de phare selon l'une quelconque des revendications 1 à 3, dans laquelle la partie de support est une partie où un arbre de mise en prise (47) et une bague isolante (48) sont mis en prise entre eux, l'arbre de mise en prise (47) étant prévu sensiblement au centre du côté de surface arrière de l'unité de phare (30), la bague isolante (48) étant fixée sur une extrémité du montant (31).

5. Structure de support de phare selon l'une quelconque des revendications 1 à 4, dans laquelle un arbre de support (36) d'un axe optique (O-O) pour l'ajustement de l'axe optique est prévu dans chacune des surfaces latérales gauche et droite de l'unité de phare (30).

6. Structure de support de phare selon la revendication 5, dans laquelle l'arbre de support (36) est agencé sur l'axe d'ajustement d'axe optique (O-O) et tourillonné en rotation par rapport à une partie de montage (75) prévue dans le couvercle avant (9).

7. Structure de support de phare selon la revendication 5 ou 6, dans laquelle un rebord sensiblement en forme de disque (37) est prévu sur une extrémité de l'arbre de support (36) sur un côté externe dans le sens de la largeur du véhicule.

8. Structure de support de phare selon l'une quelconque des revendications 1 à 7, dans laquelle un mécanisme d'ajustement (38) pour l'ajustement de l'axe optique est prévu dans une partie de surface inférieure de l'unité de phare (30).
